# EUROPÄISCHE PATENTANMELDUNG

(11) **EP 2 213 894 A1**
(43) Veröffentlichungstag der Anmeldung: **04.08.2010**
(21) Anmeldenummer: 10000652.7
(22) Anmeldetag: 22.01.2010
(51) Int. Cl.: F16C 33/50, F16C 33/54

(54) **Wälzlagerkäfig**

(30) Priorität: 30.01.2009 DE 102009006858
(71) Anmelder: Aktiebolaget SKF, 415 50 Göteborg (SE)
(72) Erfinder: Beyfuss, Berthold, 97535 Kaisten (DE); Radina, Alfred, 97711 Massbach (DE); Friedrich, Hans-Jürgen, 97486 Königsberg-Römershofen (DE); Schierling, Jonas, 97437 Hassfurt (DE)
(74) Vertreter: Schonecke, Mitja

(57) **Zusammenfassung**

Ein Wälzlagerkäfig eines Wälzlagers, beinhaltend folgende Merkmale:
- Der Käfig umfasst ein ringartiges Umfangselement von dem Stegelemente abzweigen, zwischen denen Wälzkörper des Wälzlagers anordbar sind,
- das Umfangselement umfasst eine Mehrzahl gleichartiger Sektorelemente,
- jedes der Sektorelemente weist wenigstens einen Vorsprung auf, der mit wenigstens einer korrespondierenden seitlichen Ausnehmung eines der Wälzkörper des Wälzlagers lose in Eingriff bringbar ist und
- die zunächst losen Sektor- und Stegelemente sind zum Bilden des Käfigs miteinander verbunden.

## Beschreibung

Die Erfindung betrifft einen Wälzlagerkäfig.

Beispielsweise aus der DE 79 35 982 U1 ist ein Wälzlagerkäfig bekannt, der aus zwei Seitenteilen und einer Vielzahl von getrennt gefertigten und durch Schweißen oder dgl. mit den Seitenteilen verbundenen Stegteilen besteht, wobei die Stegteile zwischen sich Taschen zur Aufnahme der Wälzkörper bilden. Dabei sind die Seiten- und Stegteile aus flach- oder profilgewalztem Draht gefertigt und die Stegteile zur Bildung von Anlaufflächen für die Wälzkörper angeprägt.

Eine Aufgabe der vorliegenden Erfindung ist es, einen verbesserten Wälzlagerkäfig zu schaffen, der insbesondere einfach und damit kostengünstig herstellbar ist.

Die Aufgabe wird durch den Gegenstand des Anspruchs 1 gelöst. Vorteilhafte Ausgestaltungen sind in den Unteransprüchen beschrieben.

Gemäß Patentanspruch 1 umfasst ein Wälzlagerkäfig eines Wälzlagers folgende Merkmale:
- Der Käfig umfasst ein ringartiges Umfangselement von dem Stegelemente abzweigen, zwischen den Wälzkörper des Wälzlagers anordenbar sind,
- das Umfangselement umfasst eine Mehrzahl gleichartiger Sektorelemente,
- jedes der Sektorelemente weist wenigstens einen Vorsprung auf, der mit wenigstens einer korrespondierenden seitlichen Ausnehmung eines der Wälzkörper lose in Eingriff bringbar ist und
- die zunächst losen Sektor- und Stegelemente sind zum Bilden des Käfigs miteinander verbunden.

Durch den sektorisierten Aufbau des Wälzlagerkäfigs lassen sich die Einzelteile besonders kostengünstig per Massenproduktion herstellen. Die Sektorelemente sind beispielsweise einfach und kostengünstig durch Ablängen von einem entsprechend profilierten Stangen- oder Bandmaterial aus Stahl oder Kunststoff herstellbar. Im Vergleich zu aus einem hohlzylinderartigen Rohling herausgearbeiteten bekannten Wälzlagerkäfigen bietet dies den Vorteil, dass nahezu kein Materialabfall durch das Herausarbeiten entsteht und sich somit mit Vorteil eine Materialeinsparung gegenüber bekannten Verfahren zur Herstellung von Wälzlagerkäfigen ergibt. Durch die Ausbildung der Vorsprünge an den Sektorelementen ist es auf besonders einfache Weise möglich, einen verliersicheren Käfig zu erzeugen, in dem beispielsweise Zylinderrollen bei der Montage des Käfigs mit den Lagerringen zu einem Wälzlager sicher gehalten sind.

In einer vorteilhaften Ausführung der Erfindung sind die Sektorelemente an ihren Verbindungsstellen derart ausgebildet, dass sich an ihnen eine Durchdringung ergibt, die zum darin Einsetzen eines Endes eines der Stegelemente vorgesehen ist. Die Sektorelemente sind derart an ihrem Ende mit einer Ausnehmung versehen, die bei Zusammenführen zweier Stegelemente die Durchdringung bildet. Derartige Ausnehmungen an den Stegelementen sind fertigungstechnisch besonders einfach zu realisieren. Besonders vorteilhaft an der Ausbildung der Durchdringung zur Einführung der Stegelemente ist, dass sich derart eine besonders einfache und stabile Verbindung der Stegelemente und der Sektorelemente untereinander ergibt.

In einer vorteilhaften Ausführungsform der Erfindung ist die Durchdringung V-förmig, U-förmig oder trapezförmig mit geraden, konvexen oder konkaven Schenkeln ausgebildet. Derartige Ausgestaltungen der Durchdringung erhöhen die Stabilität der Verbindung zwischen den Stegelementen und den Sektorelementen. In vorteilhafter Weise können die Durchdringung und die daran angepasste Form der Enden der Stegelemente derart ausgebildet sein, dass sie eine in sich stabile und haltfähige Verbindung ermöglichen.

In einer weiteren vorteilhaften Ausgestaltung der Erfindung sind die Sektorelemente derart ausgebildet, dass zwischen dem eingesetzten Ende des jeweiligen Stegelements und den Sektorelementen jeweils ein Spalt besteht, der mit einem die Sektorelemente und die Stegelemente verbindenden Material verfüllt ist. In dieser Ausführungsform lassen sich auch einfachere Geometrien der Durchdringung und des entsprechenden Endes der Stegelemente zu einer stabilen Verbindung zwischen den Stegelementen und den Sektorelementen nutzen.

In einer vorteilhaften Ausführungsform der Erfindung ist das Material zum Verbinden der Stegelemente und der Sektorelemente ein Kunststoff oder Elastomer. In diesem Fall lassen sich beispielsweise die Sektorelemente und die Stegelemente vormontieren, woraufhin die zwischen den jeweiligen Stegelementen und den angrenzenden Sektorelementen gebildeten Spalte in einem Spritzwerkzeug positioniert werden, woraufhin der Spalt jeweils mit Kunststoff oder Elastomer verfüllt wird. Die Zulassung des Spalts zwischen den Sektorelementen und den Stegelementen und des nachträglichen Verfüllens mit einem verklebenden Material ermöglicht insbesondere das Zulassen größerer Fertigungstoleranzen, wodurch die Produktion zusätzlich vereinfacht wird.

Vorteilhaft ist eine Ausgestaltung der Erfindung derart, dass die Stegelemente endseitig angeordnete Ausnehmungen aufweisen, durch eine stabile Verbindung mit dem Material ermöglicht wird. So können die Stegelemente vor ihrem Ende, auf der in den Sektorelementen steckenden Fläche jeweils mit Kerben oder Einbuchtungen versehen sein, die nach dem Einspritzen des Kunststoffes oder Elastomers für eine formschlüssige Verbindung und eine hohe axiale Festigkeit sorgen.

Weitere Vorteile, Merkmale und Einzelheiten der Erfindung ergeben sich aus den im Folgenden beschriebenen Ausführungsbeispielen der Erfindung anhand der Figuren. Dabei zeigen:
- Figur 1: in perspektivischer Ansicht einen aus Elementen zusammengesetzten Zylinderrollenlagerkäfig und
- Figur 2: in perspektivischer Ansicht einen weiteren aus Elementen zusammengesetzten Zylinderrollenlagerkäfig.

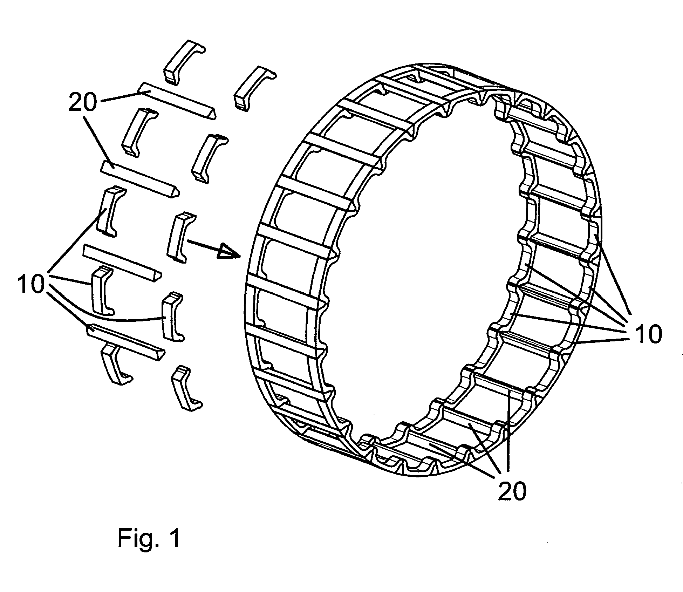

Die Figur 1 zeigt als ein Ausführungsbeispiel der Erfindung einen aus Elementen 10 und 20 zusammengesetzten Zylinderrollenlagerkäfig. Der Zylinderrollenlagerkäfig umfasst dabei an seinen beiden axialen Enden je ein ringartiges Umfangselement und eine Vielzahl, die beiden Umfangselemente miteinander verbindende Stegelemente 20. Der linke Bereich der Figur 1 zeigt dabei explosionszeichnungsartig, dass die beiden ringartigen Umfangselemente durch eine Vielzahl von gleichartigen Sektorelementen 10 gebildet sind, die zu den ringartigen Umfangselementen zusammengesetzt sind. Dabei sind die Sektorelemente 10 einfach und kostengünstig durch Ablängen von einem entsprechend profilierten Stangen- oder Bandmaterial aus Stahl hergestellt.

Auch die Stegelemente 20 sind in einfacher und kostengünstiger Weise durch ein Ablängen von einem entsprechend profilierten Stangen- oder Bandmaterial aus Stahl hergestellt. Dabei sind insbesondere die dem Außenmantel der Zylinderrollen zum Gegenüberliegen vorgesehenen Seitenflächen der Stegelemente 20 entsprechend dem Rollenaußenmantel bogenartig ausgebildet, was mit besonderem Vorteil den Schmierfilmaufbau begünstigt.

Die Sektorelemente 10 sind an ihren Verbindungsstellen derart ausgebildet, dass sich an der Verbindungsstelle in radialer Richtung eine V-förmige Einbauchung ergibt, in die hinein passend die axialen Enden der Stegelemente 20 zum Einsetzen vorgesehen sind, so dass die Positionen der Stegelemente 10 an den Umfangselementen in Umfangsrichtung vorbestimmt sind. Die einzelnen Elemente 10 und 20 sind untereinander dann stoffschlüssig, insbesondere durch ein Schweißen miteinander verbunden. Dieses Verschweißen kann beispielsweise mit einem Laser-, Elektronen- oder Plasma-Verfahren erfolgen. In anderen Ausführungsformen können die Elemente 10 und 20 auch miteinander verlötet, beispielsweise durch ein induktives Hartlöten oder Laserhartlöten, oder auch miteinander verklebt sein.

Dabei bildet jedes der Sektorelemente 10 in den Bereichen, in dem es mit den beiden benachbarten Sektorelementen 10 verbunden ist, eine potentielle Anlauffläche für eine Rollenstirnseite, die bezüglich der übrigen Stirnfläche des Sektorelements 10 radial weiter innen angeordnet ist, so dass sich in radialer Richtung gesehen für die Rollenstirnseite eine radial möglichst weit erstreckende potentielle Anlauffläche ergibt, was mit besonderem Vorteil einen zusätzlichen Verkippschutz für die Zylinderrollen darstellt. Diese größere radiale Erstreckung wenigstens in Bereichen der Umfangselemente ist mit dem aus Elementen 10 und 20 zusammengesetzten Käfig mit besonderem Vorteil unabhängig von der radialen Dicke der Stegelemente 20 erzielbar. Damit ist mit Vorteil auch eine vergleichsweise große Anbindefläche für die axialen Enden der Stegelemente 20 an den Sektorelementen 10 erzielbar.

Beim Zylinderrollenlagerkäfig der Figur 1 können die einzelnen Elemente 10 und 20 zunächst miteinander verbunden werden und dann der Käfig durch Einsetzen von Rollen zu einem entsprechenden Zylinderrollenlager zusammengebaut werden. Es ist aber auch möglich, insbesondere in Verbindung mit einem Laufbahnelement, mit Borden an beiden Enden der Zylinderrollenstirnseiten, die Elemente 10 und 20 um die in besagtes Laufbahnelement eingelegten Rollen anzuordnen und dann zu verbinden, so dass das Laufbahnelement mit den Zylinderrollen und dem Käfig eine in sich verliersichere Einheit bildet.

In wiederum anderen Ausführungen ist eine Ausbildung der Elemente 10 und 20 auch aus anderen Materialien, beispielsweise anderen metallischen Legierungen, aber auch Kunststoffen, und deren Herstellung durch Sintern und/oder Spritzgießen möglich. Weiterhin kann auch ein Kegelrollenlagerkäfig vergleichbar dem vorausgehend beschriebenen Zylinderrollenlagerkäfig ausgebildet sein, wobei sich dabei lediglich die beiden Umfangselemente in ihrem Durchmesser unterscheiden und somit zwei Arten von Sektorelementen vorzusehen sind.

Dadurch, dass der Käfig der Figur 1 einen im Wesentlichen glatten Außenmantel aufweist, ist er insbesondere als ein, beispielsweise an einem entsprechend ausgebildeten, äußeren Laufbahnelement schultergeführter Käfig einsetzbar. Dabei sind mit besonderem Vorteil die Stegelemente 20 radial nach außen hin dann durch die Schulter des äußeren Laufbahnelements zusätzlich, sozusagen mechanisch gesichert, wohingegen die Stegelemente 20 radial nach innen hin durch die aus den Sektorelementen 10 zusammengesetzten Umfangselemente gehalten sind.

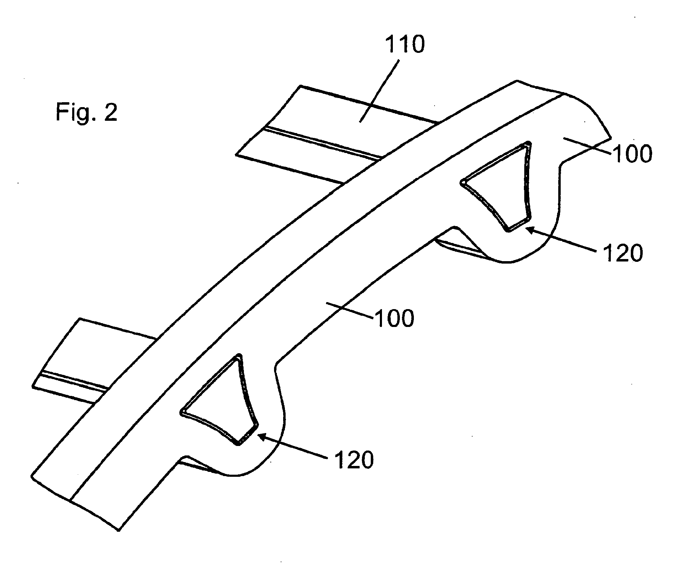

In der Figur 2 ist ein Ausführungsbeispiel der Erfindung dargestellt. Der entsprechende Zylinderrollenlagerkäfig ist in Umlaufrichtung aus Sektorelementen 100 zusammengesetzt. Jeweils zwei der Sektorelemente 100 bilden an ihrer Verbindungsstelle eine Durchdringung 120. Stegelemente 110 sind endseitig derart geformt, dass sie in die Durchdringung 120 zwischen jeweils zwei der Sektorelemente 100 einbringbar sind. Die Maße der Endseiten der Stegelemente 110 sind derart gewählt, dass zwischen der Innenwand der Durchdringung 120 und den Stegelementen 110 ein schmaler Spalt entsteht. Zur endgültigen Montage werden die jeweiligen Komponenten vormontiert und in einem Spritzwerkzeug positioniert. Daraufhin werden die in der Durchdringung entstandenen Spalte mittels Kunststoff, Elastomer oder Klebstoff ausgespritzt. Im Fall der Verwendung von Kunststoff oder Elastomer ist der Spalt bevorzugt etwa ein bis zwei Millimeter breit. Bei der Verwendung von Klebstoff ist es auch möglich, eine Spaltbreite im Bereich einiger Zehntel Millimeter zu wählen.

In einer alternativen Ausführungsform ist es beispielsweise möglich, dass zwei oder mehr der Sektorelemente 100 einstückig ausgebildet sind. Auch eine im vollen Kreisumfang einstückige Ausführung ist möglich, in der dann entsprechend Durchführungen für die Aufnahme der Stegelemente 110 ausgebildet sind.

Vorteilhaft ist eine Ausgestaltung der Stegelemente 110 derart, dass bei den in die Durchdringung 120 eingreifenden Außenflächen der Stegelemente 110 Kerben oder Einbuchtungen vorgesehen sind. Diese Kerben oder Einbuchtungen ergeben nach dem Einspritzen des Kunststoffs in die Spalte eine formschlüssige Verbindung und erhöhen die axiale Festigkeit. Durch die Verbindung der Sektorelemente 100 und der Stegelemente 110 mittels des Kunststoffs oder Elastomers ergibt sich insbesondere die Möglichkeit, sowohl die Stegelemente 110 als auch die Sektorelemente 100 mit größerer Fertigungstoleranz herzustellen. Es ist für den endgültigen Montageprozess unerheblich, ob der Spalt um wenige Zehntel Millimeter größer oder kleiner ist, oder ob dessen Dicke in einer der Durchdringungen 120 leicht schwankt. Bei ungleichmäßig groß ausgebildeten Spalten wird einfach etwas mehr Kunststoff oder Elastomer verwendet, um das jeweilige Stegelement 110 mit den angrenzenden Sektorelementen 100 zu verbinden. Durch die Verwendung des Kunststoffs oder Elastomers zur Verbindung der Stegelemente 110 und der Sektorelemente 100 ergibt sich zusätzlich der Vorteil, dass die Verbindung flexibel ist. Dies bewirkt zum Einen eine Schwingungsreduktion durch eine Dämpfung der Verbindung zwischen Stegelement 110 und Sektorelementen 100. Insgesamt lässt sich dadurch eine Geräuschreduzierung bei Einsatz des Wälzlagerkäfigs erzielen.

### Bezugszeichenliste

- 10: Sektorelement
- 20: Stegelement

- 100: Sektorelement
- 110: Stegelement
- 120: Durchdringung

## Patentansprüche

1. Wälzlagerkäfig eines Wälzlagers, beinhaltend folgende Merkmale:
- Der Käfig umfasst wenigstens ein ringartiges Umfangselement von dem Stegelemente (20) abzweigen, zwischen denen Wälzkörper des Wälzlagers anordbar sind,
- das Umfangselement ist derart ausgebildet, dass an Verbindungsstellen zwischen dem einem jeweiligen Ende eines der Stegelemente (20) und dem Umfangselement jeweils ein Spalt besteht und
- die zunächst losen Umfangs- und Stegelemente (20) sind zum Bilden des Käfigs miteinander verbunden, wobei jeder Spalt wenigstens teilweise mit einem Haftvermittler gefüllt ist.

2. Wälzlagerkäfig nach Anspruch 1, wobei das Umfangselement eine Mehrzahl gleichartiger Sektorelemente umfasst.

3. Wälzlagerkäfig nach Anspruch 1, wobei die Sektorelemente (10) an ihren Verbindungsstellen derart ausgebildet sind, dass sich an der Verbindungsstelle eine Durchdringung (120) ergibt, die zum darin Einsetzen eines Endes eines der Stegelemente (20) vorgesehen ist.

4. Wälzlagerkäfig nach Anspruch 5, wobei die Durchdringung (120) V-förmig, U-förmig oder trapezförmig mit geraden, konvexen oder konkaven Schenkeln der V-, U- oder Trapezform ausgebildet ist.

5. Wälzlagerkäfig nach Anspruch 5, wobei der Spalt **dadurch** gebildet wird, dass die Stegelemente (20) auf in der Durchdringung (120) einzuführenden Endabschnitten eine geringere Größe aufweisen als die Durchdringung (120).

6. Wälzlagerkäfig nach Anspruch 1, wobei der Spalt im Bereich von einem zehntel Millimeter bis zum zwei Millimetern breit ist.

7. Wälzlagerkäfig nach Anspruch 1 oder 2, wobei der Haftvermittler ein Kunststoff oder Elastomer ist.

8. Wälzlagerkäfig nach Anspruch 1 oder 2, wobei der Haftvermittler ein Klebstoff ist.

9. Wälzlagerkäfig nach einem der Ansprüche 1 bis 4, wobei jedes der Stegelemente endseitig angeordnete Ausnehmungen aufweist, durch die eine stabile Verbindung mit dem Material ermöglicht wird.

10. Wälzlagerkäfig nach einem der obigen Ansprüche, wobei das Umfangselement aus den Sektorelementen gebildet ist.

11. Wälzlagerkäfig nach einem der obigen Ansprüche, wobei entsprechend der Anzahl von Wälzkörpern Stegelemente und/oder Sektorelemente vorgesehen sind.

12. Wälzlagerkäfig nach einem der obigen Ansprüche, wobei die Stegelemente (20) gleichartig ausgebildet sind.

13. Wälzlagerkäfig nach einem der obigen Ansprüche, wobei der Wälzlagerkäfig als ein Rollenlagerkäfig, insbesondere für ein Zylinder-, Kegel- oder Pendelrollenlager ausgebildet ist.
